# EUROPEAN PATENT APPLICATION

(11) **EP 2 033 873 A2**
(43) Date of publication of application: **11.03.2009**
(21) Application number: 08380199.3
(22) Date of filing: 07.07.2008
(51) Int. Cl.: B62B 7/08

(54) **A foldable chassis for prams**

(30) Priority: 05.09.2007 ES 200701838 U
(71) Applicant: JANE S.A., 08184 Palau Solita i Plegamans (ES)
(72) Inventor: Jane Santamaria, Manuel, 08184 Palau Solitai Plegamans (Barcelona) (ES)
(74) Representative: Pastells Teixido, Manuel

(57) **Abstract**

A foldable chassis for prams which comprises two sides (1) being formed by the handlebar arms (2) being articulately linked to the front legs (6) and having the rear legs (7) articulately linked to them.

This chassis is **characterised in that** the rear wheel axle (11) comprises three articulated lengths, each of the ends of said axle being linked to the respective front leg through a respective link (15), said front legs (6) at their lower end converging towards a short axle (16) corresponding to the front wheels. The rear and front axles are connected to each other through a longeron (17) and the central length of the rear axle and the front axle have rotary ends respectively having the end lengths of the rear axle and the lower end of the front legs articulately linked to them.

## Description

### OBJECT OF THE INVENTION

A foldable chassis for prams.

### BACKGROUND OF THE INVENTION

There exist different models of foldable chassis for prams, said foldable chassis generally comprising two front legs and two rear legs all of them respectively ending in the corresponding wheels and being linked to each other and to the branches of the handlebar. Foldable chassis are also known which comprise only three wheels namely being two rear ones and a central front one, the front legs being arranged in an inferiorly converging arrangement in these foldable chassis.

This chassis is of the type comprising two sides being formed by the handlebar arms being articulately linked to the front legs, the rear legs being articulately linked to said arms.

### SUMMARY OF THE INVENTION

This invention has as its object a foldable chassis for prams of the aforementioned type, said foldable chassis having a simplified make-up and being in a position to be arranged in a very compact folded arrangement, its rolling supports numbering three and namely being two rear ones being made up by a respective wheel each and a central front one being made up by a double wheel, said foldable chassis also comprising a base being formed by several articulated components being such as to facilitate the folding and unfolding of the pram.

From among the components of said base are to be pointed out the rear wheel axle being formed by three articulated lengths and linked at its ends to the front legs through respective links, and the front wheel axle being short and receiving the ends of the inferiorly converging front legs.

The rear and front axles are connected to each other through a longeron, each of the ends of said two axles having a rotary element respectively having the respective one of the end lengths of the rear axle and the respective lower end of the respective one of the front legs articulately linked to it.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:

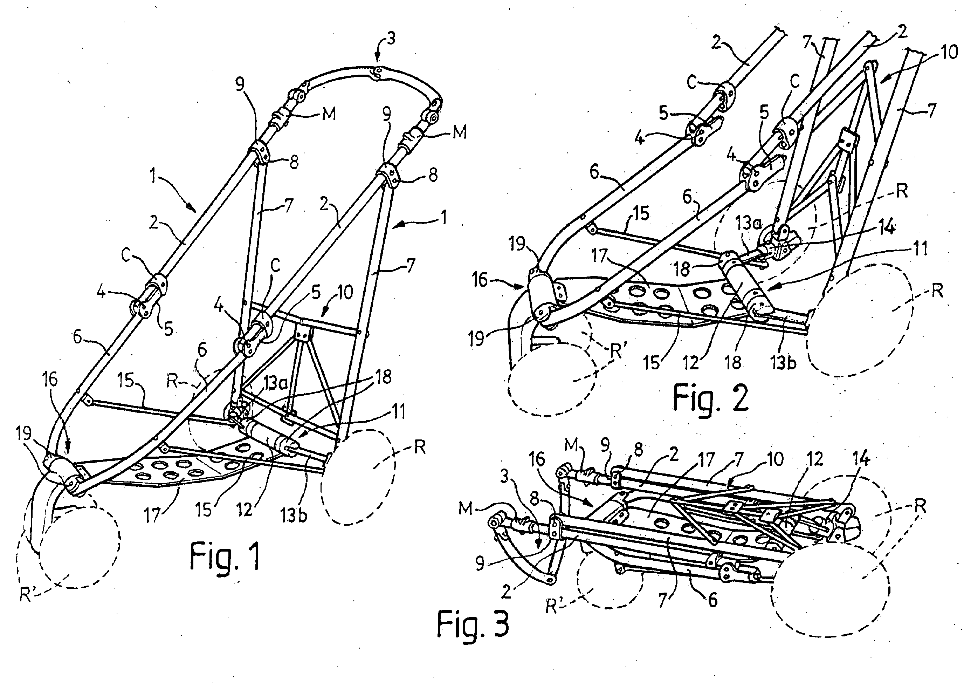

Figures 1, 2 and 3 show the foldable chassis being the object of the invention as seen in a perspective view: in the unfolded position, in the folding phase, and in the folded position, respectively.

### DETAILED DESCRIPTION

According to the drawings the foldable chassis for prams comprises its sides (1) being formed by the handlebar arms (2) upperly ending in an articulated, transversal length (3), said arms being inferiorly linked in a pin-jointed connection through pin (4) to a bracket (5) being fixedly attached to the upper end of the front legs (6).

The sides of the chassis are completed with the rear legs (7) being upperly linked in a pin-jointed connection through pins (8) to respective brackets (9) being fixedly attached to the upper region of the handlebar arms (2).

The locking means for locking the unfolded position of the chassis consist in a double compass (10) with articulated links.

A characterising feature lies in the make-up of the chassis base comprising an axle (11) for the rear wheels (R) which is formed by three mutually articulated lengths namely being a central one (12) and two end ones (13a and 13b) being at their free end articulately linked to respective supports (14) to which the rear wheels are fitted and to which the respective lower end of the respective one of the rear legs (7) is articulately linked.

The ends of the rear axle (11) are linked to the front legs (6) through respective links (15), said legs at their lower end converging towards a short axle (16) corresponding to the front wheels (R') and being connected to the rear axle (11) through a longeron (17) being formed by a plate.

The rear (11) and front (16) axles have rotary ends (18 and 19) respectively having the end lengths (13a and 13b) of the rear axle and the respective lower end of the respective one of the front legs (6) articulately linked to them.

This chassis comprises at the pin-jointed connection of the handlebar arms (2) to the front legs (6) second locking means for locking the unfolded position, said second locking means in this case being made up by a sleeve (C) being slidingly shiftable on the handlebar arms and such as to engage the upper end of the front legs (6), said sleeve being linked to a control (M) being provided at the upper end of the handlebar arms (2).

Once having unlocked the double compass (10) and the second locking means by actuating the controls (M) the sides of the chassis get closer together and with the bending of the rear axle (11) the ends of this latter through links (15) pull the front legs that at their lower end turn on the front axle (16) and come down upon the longeron (17), the handlebar arms (2) thereupon being arranged on said front legs as at the same time the rear wheels (R) have got closer together, all this as reflected in figure 3.

## Claims

1. A foldable chassis for prams which comprises two sides being formed by the handlebar arms being articulately linked to the front legs and having the rear legs articulately linked to them, **characterised in that** the rear wheel axle comprises three articulated lengths, each of the ends of said axle being linked to the respective front leg through a respective link, said front legs at their lower end converging towards a short axle corresponding to the front wheels.

2. A foldable chassis for prams, as per claim 1, **characterised in that** the rear and front axles are connected to each other through a longeron.

3. A foldable chassis for prams, as per claim 1, **characterised in that** the central length of the rear axle and the front axle have rotary ends respectively having the end lengths of the rear axle and the lower end of the front legs articulately linked to them.

4. A foldable chassis for prams, as per claim 1, **characterised in that** the end lengths of the rear axle are articulately linked to the lower end of the rear legs through respective supports.
